# FASCICULE DE BREVET EUROPEEN

(11) **EP 0 951 457 B1**
(45) Date de publication et mention de la délivrance du brevet: **20.11.2002**
(21) Numéro de dépôt: 98943953.4
(22) Date de dépôt: 10.09.1998
(51) Int. Cl.: C03C 13/00, C03C 1/00

(54) **FILS DE VERRE APTES A RENFORCER DES MATIERES ORGANIQUES ET/OU INORGANIQUES**
GLASFASERN FÜR DIE VERSTÄRKUNG VON ORGANISCHEN UND / ODER ANORGANISCHEN WERKSTOFFEN
GLASS FIBRES FOR REINFORCING ORGANIC AND/OR INORGANIC MATERIALS

(30) Priorité: 10.09.1997 FR 9711251
(43) Date de publication de la demande: 27.10.1999
(73) Titulaire: Saint-Gobain Vetrotex France S.A., 73000 Chambéry (FR)
(72) Inventeur: GALLO, Marcelo, Hernan, Buenos Aires (AR); GENECHTEN, Jan, Van, NL-5682 PJ Best (NL); BAZIN, Jean-Paul, F-95100 Argenteuil (FR); CREUX, Sophie, F-92230 Sceaux (FR); FOURNIER, Pascal, F-73000 Chambéry (FR)
(74) Mandataire: Goldenberg, Virginie Isabelle
(86) Numéro de dépôt international: FR9801932
(87) Numéro de publication internationale: WO99012858

(56) Documents cités:
- EP-A- 0 419 322
- WO-A-85/02395
- FR-A- 2 692 248
- US-A- 3 095 311
- US-A- 4 199 338
- US-A- 4 542 106
- US-A- 5 352 258
- DATABASE WPI Section Ch, Week 9534 Derwent Publications Ltd., London, GB; Class F01, AN 95-262260 XP002067345 & RU 2 027 687 C (FOKIN A I)

## Description

La présente invention concerne des fils (ou « fibres ») de verre « de renforcement », c'est-à-dire utilisables pour le renforcement de matières organiques et/ou inorganiques et utilisables comme fils textiles, ces fils étant susceptibles d'être obtenus par le procédé qui consiste à étirer mécaniquement des filets de verre fondu s'écoulant d'orifices disposés à la base d'une filière généralement chauffée par effet Joule.

La présente invention vise plus précisément des fils de verre présentant une composition nouvelle particulièrement avantageuse.

Le domaine des fils de verre de renforcement est un domaine très particulier de l'industrie du verre. Ces fils sont élaborés à partir de compositions de verre spécifiques, le verre utilisé devant pouvoir être étiré sous forme de filaments de quelques micromètres de diamètre suivant le procédé précédemment défini et devant permettre la formation de fils continus aptes à remplir notamment leur rôle de renfort. Les fils de verre de renforcement les plus couramment utilisés sont ainsi les fils formés de verres qui dérivent de l'eutecuque à 1170°C du diagramme ternaire SiO₂-Al₂O₃-CaO. en particulier les fils désignés sous le nom de fils de verre E. dont l'archétype est décrit dans les brevets US-A-2 334 981 et US-A-2 571 074. Les fils de verre E présentent une composition essentiellement à base de silice, d'alumine, de chaux et d'anhydre borique. l'anhydre borique. présent à des taux allant en pratique de 5 à 13% dans les compositions de verres qualifiés « verre E », remplaçant une partie de la silice, les fils de verre E se caractérisant en outre par une teneur en oxydes alcalins (essentiellement Na₂O et/ou K₂O) limitée.

Depuis les deux brevets cités, les verres comprenant ces constituants ont fait l'objet de nombreuses modifications ayant pour but de réduire les émanations de produits susceptibles de polluer l'atmosphère, de réduire le coût de la composition en diminuant la teneur des constituants les plus onéreux, d'améliorer l'aptitude de ces verres au fibrage (le fibrage ou formage correspondant à l'opération d'étirage des filaments de verre à partir d'une filière selon le procédé précédemment évoqué), notamment en diminuant leur viscosité aux températures élevées ainsi que leur tendance à dévitrifier, d'améliorer telle ou telle propriété particulière. Des tentatives de réduire le coût des compositions ont notamment été faites mais généralement au détriment de leur aptitude au fibrage. la mise en oeuvre de ces verres pour obtenir des fils de renforcement devenant généralement plus difficile ou délicate, obligeant éventuellement à des modifications des installations de fibrage existantes ou des conditions de travail et entraînant éventuellement des baisses de rendement et une augmentation du taux des déchets obtenus conduisant au final à une augmentation du coût global de la production. La mise au point de compositions beaucoup plus économiques que les compositions de verre E mais pouvant être fibrées sans difficultés, comme les compositions de verre E traditionnelles (et présentant donc un coût global de production moindre), reste donc encore à faire et est particulièrement souhaitable.

La présente invention a ainsi pour objet des fils de verre de composition répondant au souhait précédent, c'est-à-dire des fils de verre de composition (et de production) la plus économique possible tout en conservant une aptitude au fibrage particulièrement bonne.

Ces buts sont atteints grâce à des fils de verre dont la composition présente un des meilleurs compromis possibles entre son coût et son aptitude au fibrage, cette composition comprenant essentiellement les constituants suivants dans les limites définies ci-après exprimées en pourcentages pondéraux :

| | |
|---|---|
| SiO₂ | 58 à 62 % |
| Al₂O₃ | 10 à 16 % |
| CaO | plus de 18 % |
| MgO | plus de 1,5 % |
| CaO + MgO | moins de 28 % |
| Na₂O + K₂O + Li₂O | moins de 2% |
| TiO₂ | moins de 1,5 % |
| Fe₂O₃ | moins de 0,5 % |
| B₂O₃ | moins de 2 % |
| F₂ | moins de 2 % |

cette composition comprenant en outre moins de 1 % d'autre(s) constituant(s) et comprenant plus de 0,5 % d'au moins un des trois composants F₂, B₂O₃ ou Li₂O.

En particulier, selon un mode préféré de réalisation de l'invention, les fils de verre présentent une composition comprenant essentiellement les constituants suivants dans les limites définies ci-après exprimées en pourcentages pondéraux :

| | |
|---|---|
| SiO₂ | 58 à 62 % |
| Al₂O₃ | 10 à 16 % |
| CaO | plus de 18 % |
| MgO | plus de 1,5 % |
| CaO + MgO | moins de 28 % |
| Na₂O + K₂O + Li₂O | moins de 2 % |
| TiO₂ | moins de 1,5 % |
| Fe₂O₃ | moins de 0,5 % |
| B₂O₃ | moins de 2 % |
| F₂ | moins de 2 % |

cette composition comprenant en outre moins de 1 % d'autre(s) constituant(s) et comprenant plus de 0,5 % de F₂. Dans ce mode de réalisation de l'invention, la composition peut être avantageusement dénuée de B₂O₃ (intérêt économique et avantage en terme de traitement des fumées) ou le comprendre. à titre d'impureté notamment, à des taux allant de 0 à 0,5 % en poids. Dans une variante, cette composition peut aussi comprendre entre 0,5 et 2 % de B₂O₃. De la même façon, cette composition peut être dénuée de Li₂O (intérêt notamment économique) ou le comprendre à des taux allant de 0 à 0,5 % en poids ou à des taux compris entre 0,5 et 2 % en poids.

Selon un autre mode de réalisation de l'invention, les fils de verre présentent une composition comprenant essentiellement les constituants suivants dans les limites définies ci-après exprimées en pourcentages pondéraux :

| | |
|---|---|
| SiO₂ | 58 à 62 % |
| Al₂O₃ | 10 à 16 % |
| CaO | plus de 18 % |
| MgO | plus de 1,5 % |
| CaO + MgO | moins de 28 % |
| Na₂O + K₂O + Li₂O | moins de 2 % |
| TiO₂ | moins de 1,5 % |
| Fe₂O₃ | moins de 0,5 % |
| B₂O₃ | moins de 2 % |
| F₂ | moins de 2 % |

cette composition comprenant en outre moins de 1 % d'autre(s) constituant(s) et comprenant plus de 0,5 % de B₂O₃. Dans ce mode de réalisation de l'invention, la composition peut être dénuée de F₂ (avantage en terme de traitement des fumées) ou le comprendre, à titre d'impureté notamment, à des taux allant de 0 à 0,5 % en poids. Dans une variante, cette composition peut aussi comprendre entre 0.5 et 2 % de F₂. De la même façon, cette composition peut être dénuée de Li₂O ou le comprendre à des taux allant de 0 à 0,5 % en poids ou à des taux compris entre 0,5 et 2 % en poids.

Dans un troisième mode de réalisation de l'invention, les fils de verre présentent une composition telle que définie selon l'invention, cette composition comprenant plus de 0,5% de Li₂O. Dans ce mode de réalisation, la composition peut être dénuée de F₂ ou le comprendre à titre d'impureté notamment à des taux allant de 0 à 0,5% en poids ou à des taux compris entre 0,5 et 2% en poids. De la même façon, cette composition peut être dénuée de B₂O₃ ou le comprendre à des taux allant de 0 à 0,5% en poids ou à des taux compris entre 0.5 et 2% en poids.

La silice est l'un des oxydes qui forme le réseau des verres selon l'invention et joue un rôle essentiel pour leur stabilité. Dans le cadre des limites définies précédemment, lorsque le pourcentage de ce constituant est inférieur à 58 %, la viscosité du verre devient trop faible et le phénomène de dévitrification intervient trop facilement lors du fibrage; lorsque son pourcentage excède 62 %, le verre devient très visqueux et difficile à fondre. De préférence, le taux de silice est supérieur à 58 % (et de façon particulièrement préférée, il est supérieur à 58,5%) et est généralement compris entre 59 et 62 %.

L'alumine constitue également un formateur du réseau des verres selon l'invention et joue un rôle très important à l'égard de la résistance de ces verres. Dans le cadre des limites définies selon l'invention, la diminution du pourcentage de cet oxyde en dessous de 10 % entraîne une augmentation sensible de l'attaque hydrolytique du verre tandis que l'augmentation du pourcentage de cet oxyde au dessus de 16 % entraîne des risques de dévitrification et une augmentation de la viscosité.

Dans la composition selon l'invention, la chaux et la magnésie permettent de régler la viscosité et de contrôler la dévitrification des verres selon l'invention. Dans le cadre des limites définies pour les oxydes précédents, une bonne aptitude au fibrage est obtenue avec des taux de CaO et de MgO supérieurs à 18 et 1,5 % respectivement et en maintenant la somme des teneurs de ces oxydes alcalino-terreux inférieure à 28 % (de préférence inférieure à 27 %), le phénomène de dévitrification s'accentuant dans des proportions inacceptables au dessus de 28 %. La somme des teneurs en CaO et MgO est généralement supérieure à 21 %, de préférence est supérieure à 23 %, la viscosité des verres devenant généralement trop élevée à des teneurs inférieures. De préférence les teneurs en CaO et MgO ne dépassent pas respectivement 26 et 10 % afin d'éviter des problèmes de dévitrification spécifiques (respectivement en wollastonite et en diopside) pouvant survenir à des taux plus élevés de chacun de ces constituants. Par ailleurs, les teneurs minimales en CaO et MgO sont respectivement de 18 et 1,5 % pour les raisons de facilité de fibrage vues précédemment ainsi que pour des raisons économiques et pratiques. Dans la plupart des cas selon l'invention, la teneur en MgO est plutôt comprise entre 2 et 4 %, voire entre 2 et 3,5 % et la teneur en CaO est plutôt comprise entre 20 et 25 %.

Na₂O et K₂O peuvent être introduits dans les compositions des fils de verre selon l'invention pour limiter plus la dévitrification et réduire éventuellement la viscosité du verre. La teneur en oxydes alcalins Na₂O + K₂O + Li₂O doit cependant rester inférieure à 2 % pour éviter une augmentation de la conductivité électrique inacceptable pour les applications électroniques et pour éviter une diminution pénalisante de la résistance hydrolytique du verre. La composition peut contenir un seul oxyde alcalin (parmi Na₂O, K₂O et Li₂O) ou peut contenir une combinaison d'au moins deux oxydes alcalins. Lorsque la composition selon l'invention comprend moins de 0,5 % de F₂ et moins de 0,5 % de B₂O₃, elle comprend nécessairement plus de 0,5 % de Li₂O, conformément à la définition de l'invention, et peut aussi comprendre, éventuellement, Na₂O et/ou K₂O. Lorsque la composition selon l'invention comprend plus de 0.5 % de F₂ et/ou plus de 0.5 % de B₂O₃, elle peut par exemple comprendre avantageusement de 0,5 à 1 % de Na₂O et éventuellement K₂O (par exemple de 0 à 0,5 %) et/ou Li₂O.

Dans la composition selon l'invention, TiO₂ joue un rôle de fluidifiant et de ralentisseur de cristallisation. Il peut être présent à titre d'impureté (son taux dans la composition est alors de 0 à 0,5 %) ou avoir été ajouté expressément à la composition. Cependant son ajout volontaire dans la composition oblige à utiliser des matières premières inhabituelles très spécifiques et augmente le coût de la composition. Dans le cadre de la présente invention, sa présence nest avantageuse que pour une teneur inférieure à 1,5 %, de préférence inférieure à 1 %.

Les oxydes de fer (exprimés sous forme de Fe₂O₃) sont généralement présents à titre d'impuretés dans la composition selon l'invention. Le taux de Fe₂O₃ doit rester inférieur à 0,5 %, Fe₂O₃ à des taux plus élevés pouvant nuire de façon rédhibitoire à la couleur des produits et aux transferts de chaleur dans le procédé de fabrication des fils.

Dans le cadre de la présente invention, la présence de fluor (exprimé sous forme de F₂), de B₂O₃ ou de Li₂O est indispensable à des taux supérieurs à 0,5 % (et de préférence à des taux d'au moins 0,7% en poids) pour obtenir des verres faciles à fondre et pouvant être fibrés sans difficulté et avec de bons rendements dans des installations classiques utilisées par exemple pour fibrer des compositions de verre E. Pour des taux inférieurs à la fois en F₂, en B₂O₃ et en Li₂O, on observe en effet des difficultés de fibrage à des températures déjà très élevées et/ou un ralentissement inacceptable de la vitesse de fusion du mélange vitrifiable utilisé pour obtenir les fibres selon l'invention lorsque ce mélange est fondu dans les mêmes conditions que les conditions de fusion observées pour la fabrication de fibres de verre E. Les verres selon l'invention peuvent ainsi être fibrés avec un rendement satisfaisant dans des conditions industrielles d'exploitation. Par ailleurs, ces verres présentent une viscosité de 10^{2,5} Poises (soit environ 316 Poises) à une température comprise entre 1200 et 1380°C (voire 1370°C) et une viscosité de 10³ Poises à une température comprise entre 1110 et 1290°C, ce qui autorise leur transport dans les canaux des fours sans dépenses importantes d'énergie et leur utilisation dans des installations traditionnelles de fibrage de verre E. De ce fait et du fait du coût réduit des compositions selon l'invention, le coût global de production des fils selon l'invention est avantageusement diminué par rapport au coût habituel de production des fils de verre E.

Les teneurs respectives en F₂, en B₂O₃ et en Li₂O restent également avantageusement inférieures à 2 %, de préférence inférieures à 1.8 et de façon particulièrement préférée inférieures à 1,5 %, pour éviter des défauts d'opacification des verres, des problèmes importants de traitement de fumées et les problèmes précédemment mentionnés liés aux taux importants d'oxydes alcalins, cette limitation permettant également d'obtenir les verres particulièrement économiques et de mise en oeuvre facile recherchés selon l'invention.

Un ou plusieurs autres composants (différents de ceux déjà considérés, c'est-à-dire différents de SiO₂, Al₂O₃, CaO, MgO, Na₂O, K₂O, Li O, B₂O₃, F₂, TiO₂ et Fe₂O₃) peuvent également être présents, généralement à titre d'impuretés, dans la composition selon l'invention, la somme des taux de ces autres composants restant inférieure à 1 % (afin de ne pas risquer de dégrader les propriétés des verres), de préférence étant inférieure à 0,5 %, le taux de chaque autre composant présent n'excédant pas généralement 0,5 %.

Les fils selon l'invention peuvent ainsi être réalisés et mis en oeuvre comme les fils de verre E; ils sont en outre beaucoup plus économiques et présentent une meilleure résistance à l'attaque hydrolytique que les fils de verre E.

Un mode de réalisation particulièrement avantageux selon l'invention, offrant un bon compromis entre le coût de la composition, l'aptitude au fibrage des verres et les propriétés des fils obtenues, est celui dans lequel les fils ont la composition définie par les limites ci-après, exprimées en pourcentages pondéraux :

| | |
|---|---|
| SiO₂ | 58,5 à 61 % (et de préférence : 59 à 61%) |
| Al₂O₃ | 11 à 14 % |
| CaO | 21 à 23 % |
| MgO | 2 à 3,5 % |
| Na₂O + K₂O + Li₂O | 0,5 à 1,8 % |
| TiO₂ | 0 à 1 % |
| Fe₂O₃ | 0 à 0,4 % |
| B₂O₃ | jusqu'à 1,8 % |
| F₂ | jusqu'à 1,8 % |

cette composition comprenant en outre au moins 0,7 % d'au moins un des trois composants F₂, B₂O₃, Li₂O et comprenant moins de 1% (de préférence moins de 0,5 %) d'autre(s) constituant(s).

De façon particulièrement avantageuse, ces fils ont par exemple la composition définie par les limites ci-après, exprimées en pourcentages pondéraux :

| | |
|---|---|
| SiO₂ | 59,0 à 60,7 % (et de préférence : 59.5 à 60.7%) |
| Al₂O₃ | 12,2 à 13,5 % |
| CaO | 21,6 à 22,6 % (et de preference : 21.8 à 22.6%) |
| MgO | 2,2 à 3,1 % |
| Na₂O + K₂O + Li₂O | 0,6 à 1,4 % |
| TiO₂ | 0 à 0,8 % |
| Fe₂O₃ | 0 à 0,4 % |
| B₂O₃ | jusqu'à 1,4 % |
| F₂ | jusqu'à 1,4 % |

cette composition comprenant en outre au moins 0,7 % d'au moins un des trois composants F₂, B₂O₃, Li₂O et comprenant moins de 1% (de préférence moins de 0,5 %) d'autre(s) constituant(s).

Les fils de verre selon l'invention sont obtenus à partir des verres de composition précédemment décrite selon le procédé suivant : on étire une multiplicité de filets de verre fondu, s'écoulant d'une multiplicité d'orifices disposés à la base d'une ou plusieurs filières, sous la forme d'une ou plusieurs nappes de filaments continus, puis on rassemble les filaments en un ou plusieurs fils que l'on collecte sur un support en mouvement. Il peut s'agir d'un support en rotation lorsque les fils sont collectés sous forme d'enroulements ou d'un support en translation lorsque les fils sont coupés par un organe servant également à les étirer ou lorsque les fils sont projetés par un organe servant à les étirer de façon à former un mat.

Les fils obtenus, éventuellement après d'autres opérations de transformation, peuvent ainsi se présenter sous différentes formes : fils continus, fils coupés, tresses, rubans, mats, réseaux, voiles (ou autres structures où les filaments constituant les fils sont dissociés et dispersés) .., ces fils étant composés de filaments de diamètre pouvant aller de 5 à 24 microns environ.

Le verre fondu alimentant les filières est généralement obtenu à partir de matières (ou produits ou composants ou matériaux) éventuellement pures (issues par exemple de l'industrie chimique) mais le plus souvent naturelles ces dernières comprenant parfois des impuretés à l'état de traces, ces matières premières (pures ou naturelles) étant mélangées dans des proportions appropriées pour obtenir la composition désirée, puis étant fondues. La température du verre fondu (et donc sa viscosité) est réglée de façon traditionnelle par l'opérateur de façon à permettre le fibrage du verre en evitant notamment les problèmes de dévitrification et de façon à obtenir la meilleure qualité possible des fils de verre. Avant leur rassemblement sous forme de fils, les filaments sont généralement revêtus d'une composition d'ensimage (choisie de façon traditionnelle en fonction notamment de la destination des fils) permettant de les protéger de l'abrasion et facilitant leur association ultérieure avec des matières à renforcer.

Selon un procédé de fabrication des fils selon l'invention particulièrement avantageux, une partie au moins des matières premières utilisées pour réaliser le verre fondu sont des déchets de fils de verre, préférentiellement des déchets de fils de verre de renforcement, par exemple des déchets de fils de verre tels que définis selon l'invention et/ou des déchets de fils de verre E. Dans ce dernier cas, il s'agit par exemple de déchets de fils présentant la composition suivante. exprimée en pourcentages pondéraux : SiO₂ : 52-57 % ; Al₂O 12-16 % ; CaO : 16-25 % ; MgO : 0-6 % ; B₂O₃ : 5-13 %, oxydes alcalins (essentiellement Na₂O et/ou K₂O) : 0-2% (cette composition pouvant également comprendre d'autre(s) composant(s) dans des proportions n'excédant pas 1,5% pour chaque autre composant), les fils de cette composition étant en pratique considérés comme étant des fils de verre E. De façon particulièrement surprenante, les déchets de fils de verre tels que les fils de verre E, posant des difficultés de recyclage dans la fabrication des fils de verre E, sont ici parfaitement réutilisables dans la fabrication de fils de verre selon l'invention. Ils peuvent être réintroduits sans difficulté dans le mélange de matières premières utilisé pour réaliser le verre fondu, les proportions des autres matières premières utilisées (généralement des matières premières naturelles et/ou pures) étant réajustées pour obtenir la composition telle que définie selon l'invention. De la même façon des déchets de fils tels que définis selon l'invention peuvent être utilisés et/ou éventuellement des déchets d'autres fils de verre de renforcement. Les déchets de fils de verre proviennent généralement des déchets ou rebuts non bobinés (ou non récupérés sur des supports en translation) récupérés sous les filières de fabrication des fils de verre mais peuvent également provenir des déchets ou rebuts de finissage des produits obtenus (bords découpés des mats, extrémités des enroulements, ...), ces déchets ou rebuts étant éventuellement traités (par exemple thermiquement) afin d'éliminer, le cas échéant, l'ensimage les recouvrant et étant broyés de façon à présenter, le cas échéant, une granulométrie comparable à celle des autres matières premières utilisées pour réaliser les fils selon l'invention.

De préférence, le taux de déchets de fils de verre présents dans le mélange de matières premières que l'on fond pour obtenir le verre fondu de composition selon l'invention, représente de 0 à 35% en poids du mélange, de façon particulièrement préférée il est compris entre 0 et 25% en poids du mélange et de façon particulièrement avantageuse il constitue de 5 à 20% en poids du mélange. Le procédé utilisant les déchets de fils de verre est particulièrement économique, et permet d'obtenir des coûts de fabrication encore plus avantageux conformément à l'invention.

Les composites obtenus à partir des fils selon l'invention comprennent au moins une matière organique et/ou au moins une matière inorganique et comprennent des fils de verre, une partie au moins des fils étant les fils de verre selon l'invention.

Eventuellement, les fils de verre selon l'invention peuvent déjà avoir été associés, par exemple en cours d'étirage, à des filaments de matière organique de façon à obtenir des fils composites. Par extension, par « fils de verre dont la composition comprend... », on entend selon l'invention des « fils formés à partir de filaments de verre dont la composition comprend... », les filaments de verre étant éventuellement associés à des filaments organiques avant le rassemblement des filaments en fils.

Les avantages présentés par les fils de verre selon l'invention seront mieux appréciés à travers les exemples suivant illustrant la présente invention sans toutefois la limiter.

### EXEMPLE 1

Dans cet exemple, des fils de verre composés de filaments de verre de 14 µm de diamètre sont obtenus par étirage de verre fondu, le verre présentant la composition suivante exprimée en pourcentages pondéraux :

| | |
|---|---|
| SiO₂ | 60,18 % |
| Al₂O₃ | 13,00 % |
| CaO | 22,00 % |
| MgO | 2,43 % |
| Na₂O | 0,65 % |
| K₂O | 0,30 % |
| TiO₂ | 0,11 % |
| Fe₂O₃ | 0,16 % |
| SrO | 0,02 % |
| F₂ | 1,15 % |

Ce verre présente une viscosité de 10^{2,5} Poises à une température de 1341°C et une viscosité de 10³ Poises à une température de 1255°C. Il présente également une température de liquidus de 1180°C. La viscosité et les températures précédentes sont mesurées selon des méthodes bien connues de l'homme de l'art.

Ce verre permet également de réaliser une économie d'au moins 30 % sur le coût des matières premières et de son élaboration par rapport a une composition de verre E traditionnelle. Il est en outre facile à fondre et peut être fibré sur des installations de fibrage de verre E traditionnelles.

### EXEMPLE 2

Dans cet exemple, des fils de verre composés de filaments de verre de 14 µm de diamètre sont obtenus par étirage de verre fondu, le verre présentant la composition suivante exprimée en pourcentages pondéraux :

| | |
|---|---|
| SiO₂ | 60,82 % |
| Al₂O₃ | 11,70 % |
| CaO | 21,20 % |
| MgO | 2,80 % |
| Na₂O | 1,10 % |
| K₂O | 0,30 % |
| TiO₂ | 0,10 % |
| Fe₂O₃ | 0,16 % |
| SrO | 0,02 % |
| B₂O₃ | 1,80 % |

Ce verre présente une viscosité de 10^{2,5} Poises à une température de 1351°C et une viscosité de 10³ Poises à une température de 1262°C. Il présente également une température de liquidus de 1180°C.

Ce verre est beaucoup plus économique qu'un verre E traditionnel, il est facile à fondre et peut être fibré sur des installations de fibrage de verre E traditionnelles.

### EXEMPLE COMPARATIF

Dans cet exemple, des fils de verre composés de filaments de verre de 14 µm de diamètre sont obtenus par étirage de verre fondu, le verre présentant la composition suivante exprimée en pourcentages pondéraux :

| | |
|---|---|
| SiO₂ | 60,80 % |
| Al₂O₃ | 12,70 % |
| CaO | 21,50 % |
| MgO | 3,20 % |
| Na₂O | 0,45 % |
| K₂O | 0.10 % |
| TiO₂ | 0,50 % |
| Fe₂O₃ | 0,30 % |
| B₂O₃ | 0,45 % |

Ce verre présente une viscosité de 10^{2 5} Poises à une température de 1382°C. Il présente également une température de liquidus de 1200°C.

Un tel verre est beaucoup plus visqueux que les verres des exemples précédents à une température donnée et nécessite des températures de fibrage beaucoup plus élevées. Il apparaît en fait que ce verre peut difficilement être fibré sur des installations de fibrage de verre E traditionnelles et nécessite des installations spécifiques autorisant des températures de fibrage plus élevées. De plus, ce verre est beaucoup plus difficile à fondre que les verres des exemples précédents dans les mêmes conditions.

Les fils de verre selon l'invention conviennent avantageusement pour toutes les applications habituelles des fils de verre E classique

## Revendications

1. Fil de verre de renforcement dont la composition comprend les constituants suivants, dans les limites définies ci-après exprimées en pourcentages pondéraux :
| | |
|---|---|
| SiO₂ | 58 à 62 % |
| Al₂O₃ | 10 à 16 % |
| CaO | plus de 18 % |
| MgO | plus de 1,5 % |
| CaO + MgO | moins de 28 % |
| Na₂O + K₂O + Li₂O | moins de 2 % |
| TiO₂ | moins de 1,5 % |
| Fe₂O₃ | moins de 0,5 % |
| B₂O₃ | moins de 2 % |
| F₂ | moins de 2 % |
cette composition comprenant en outre moins de 1 % d'autre(s) constituant(s) et comprenant plus de 0,5 % d'au moins un des trois composants F₂, B₂O₃ ou Li₂O.

2. Fil de verre selon la revendication 1, **caractérisé en ce que** le verre formant le fil présente une viscosité de 10^{2,5} Poises à une température comprise entre 1200 et 1380°C et une viscosité de 10³ Poises à une température comprise entre 1110 et 1290°C.

3. Fil de verre selon l'une des revendications 1 ou 2, **caractérisé en ce que** dans sa composition la somme des teneurs en CaO et MgO est supérieure à 21% en poids, les teneurs en CaO et MgO ne dépassant pas respectivement 26 et 10% en poids.

4. Fil de verre selon l'une des revendications 1 à 3, **caractérisé en ce que** sa composition comprend les constituants suivants, dans les limites définies ci-après exprimées en pourcentages pondéraux :
| | |
|---|---|
| SiO₂ | 58,5 à 61 % |
| Al₂O₃ | 11 à 14 % |
| CaO | 21 à 23 % |
| MgO | 2 à 3,5 % |
| Na₂O + K₂O + Li₂O | 0,5 à 1,8 % |
| TiO₂ | 0 à 1 % |
| Fe₂O₃ | 0 à 0,4 % |
| B₂O₃ | jusqu'à 1,8 % |
| F₂ | jusqu'à 1,8 % |
cette composition comprenant en outre au moins 0,7 % d'au moins un des trois composants F₂, B₂O₃, Li₂O et comprenant moins de 1 % d'autre(s) constituant(s).

5. Composite de fils de verre et de matière(s) organique(s) et/ou inorganique(s), **caractérisé en ce qu'**il comprend des fils de verre tels que définis par l'une des revendications 1 à 4.

6. Procédé de fabrication de fils de verre selon lequel on étire une multiplicité de filets de verre fondu, s'écoulant d'une multiplicité d'orifices disposés à la base d'une ou plusieurs filières, sous la forme d'une ou plusieurs nappes de filaments continus, puis on rassemble les filaments en un ou plusieurs fils que l'on collecte sur un support en mouvement, le verre fondu alimentant les orifices de la ou des filières présentant la composition suivante, exprimée en pourcentages pondéraux :
| | |
|---|---|
| SiO₂ | 58 à 62 % |
| Al₂O₃ | 10 à 16 % |
| CaO | plus de 18 % |
| MgO | plus de 1,5 % |
| CaO + MgO | moins de 28 % |
| Na₂O + K₂O + Li₂O | moins de 2 % |
| TiO₂ | moins de 1,5 % |
| Fe₂O₃ | moins de 0,5 % |
| B₂O₃ | moins de 2 % |
| F₂ | moins de 2 % |
cette composition comprenant en outre moins de 1% d'autre(s) constituant(s) et comprenant plus de 0,5% d'au moins un des trois composants F₂, B₂O₃ ou LiO₂.

7. Procédé selon la revendication 6, **caractérisé en ce que** le verre fondu est obtenu à partir de matières premières mélangées dans des proportions appropriées, une partie au moins desdites matières premières étant des déchets de fils de verre.

8. Procédé selon la revendication 7, **caractérisé en ce que** les déchets sont des déchets de fils de verre E et/ou des déchets de fils de verre tels que définis selon l'une des revendications 1 à 4.

9. Procédé selon l'une des revendications 7 ou 8, **caractérisé en ce que** les déchets représentent de 0 à 35% en poids des matières premières.

10. Composition de verre adaptée à la réalisation de fils de verre de renforcement comprenant les constituants suivants, dans les limites définies ci-après exprimées en pourcentages pondéraux :
| | |
|---|---|
| SiO₂ | 58 à 62 % |
| Al₂O₃ | 10 à 16 % |
| CaO | plus de 18 % |
| MgO | plus de 1,5 % |
| CaO + MgO | moins de 28 % |
| Na₂O + K₂O + Li₂O | moins de 2 % |
| TiO₂ | moins de 1,5 % |
| Fe₂O₃ | moins de 0,5 % |
| B₂O₃ | moins de 2 % |
| F₂ | moins de 2 % |
cette composition comprenant en outre moins de 1 % d'autre(s) constituant(s) et comprenant plus de 0,5 % d'au moins un des trois composants F₂, B₂O₃ ou Li₂O.

## Patentansprüche

1. Glasfaden zur Verstärkung, dessen Zusammensetzung folgende Bestandteile innerhalb nachstehender in Gewichtsprozent angegebener Grenzen:
| | | | |
|---|---|---|---|
| SiO₂ | 58 | bis | 62 % |
| Al₂O₃ | 10 | bis | 16 % |
| CaO | | über | 18 % |
| MgO | | über | 1,5 % |
| CaO + MgO | | unter | 28 % |
| Na₂O + K₂O + Li₂O | | unter | 2 % |
| TiO₂ | | unter | 1,5 % |
| Fe₂O₃ | | unter | 0,5 % |
| B₂O₃ | | unter | 2 % |
| F₂ | | unter | 2 % |
umfasst, wobei die Zusammensetzung außerdem weniger als 1 % eines weiteren (weiterer) Bestandteils (Bestandteile) und mehr als 0,5 % mindestens eines der drei Bestandteile F₂, B₂O₃ oder Li₂O enthält.

2. Glasfaden nach Anspruch 1, **dadurch gekennzeichnet, dass** das den Faden bildende Glas bei einer Temperatur von 1 200 bis 1 380 °C eine Viskosität von 10^{2,5} Poise und bei einer Temperatur von 1 110 bis 1 290 °C eine Viskosität von 10³ Poise aufweist.

3. Glasfaden nach Anspruch 1 oder 2, **dadurch gekennzeichnet, dass** in seiner Zusammensetzung die Summe der Gehalte an CaO und MgO mehr als 21 Gew.-% beträgt und die Gehalte an CaO und MgO 26 Gew.-% bzw. 10 Gew.-% nicht übersteigen.

4. Glasfaden nach einem der Ansprüche 1 bis 3, **dadurch gekennzeichnet, dass** seine Zusammensetzung folgende Bestandteile innerhalb nachstehender in Gewichtsprozent angegebener Grenzen:
| | | | |
|---|---|---|---|
| SiO₂ | 58,5 | bis | 61 % |
| Al₂O₃ | 11 | bis | 14 % |
| CaO | 21 | bis | 23 % |
| MgO | 2 | bis | 3,5 % |
| Na₂O + K₂O + Li₂O | 0,5 | bis | 1,8 % |
| TiO₂ | 0 | bis | 1 % |
| Fe₂O₃ | 0 | bis | 0,4 % |
| B₂O₃ | | bis | 1,8 % |
| F₂ | | bis | 1,8 % |
umfasst, wobei diese Zusammensetzung außerdem mindestens 0,7 % mindestens eines der drei Bestandteile F₂, B₂O₃, Li₂O und weniger als 1 % eines weiteren (weiterer) Bestandteils (Bestandteile) enthält.

5. Verbundwerkstoff aus Glasfäden und organischem (organischen) und/oder anorganischem (anorganischen) Material (Materialien), **dadurch gekennzeichnet, dass** er wie von einem der Ansprüche 1 bis 4 definierte Glasfäden umfasst.

6. Verfahren zur Herstellung von Glasfäden, gemäß welchem eine Vielzahl von Glasstrahlen, die aus einer Vielzahl von am Boden einer oder mehrerer Spinndüsen angeordneten Öffnungen kommen, zur Form einer bzw. mehrerer Bahnen aus endlosen Filamenten gezogen wird und diese anschließend zu einem oder mehreren Fäden vereinigt werden, die auf einem sich bewegenden Träger gesammelt werden, wobei die Glasschmelze, die den Öffnungen der Spinndüse(en) zugeführt wird, folgende in Gewichtsprozent angegebene Zusammensetzung aufweist:
| | | | |
|---|---|---|---|
| SiO₂ | 58 | bis | 62 % |
| Al₂O₃ | 10 | bis | 16 % |
| CaO | | über | 18 % |
| MgO | | über | 1,5 % |
| CaO + MgO | | unter | 28 % |
| Na₂O + K₂O + Li₂O | | unter | 2 % |
| TiO₂ | | unter | 1,5 % |
| Fe₂O₃ | | unter | 0,5 % |
| B₂O₃ | | unter | 2 % |
| F₂ | | unter | 2 % |
wobei diese Zusammensetzung außerdem weniger als 1 % eines weiteren (weiterer) Bestandteils (Bestandteile) und mehr als 0,5 % mindestens eines der drei Bestandteile F₂, B₂O₃ oder Li₂O enthält.

7. Verfahren nach Anspruch 6, **dadurch gekennzeichnet, dass** die Glasschmelze aus in geeigneten Anteilen vermischten Glasrohstoffen erhalten wird, wovon mindestens ein Teil Glasfädenbruch ist.

8. Verfahren nach Anspruch 7, **dadurch gekennzeichnet, dass** der Glasbruch welcher aus E-Glas-Fäden und/oder aus Glasfäden wie in einem der Ansprüche 1 bis 4 definiert ist.

9. Verfahren nach Anspruch 7 oder 8, **dadurch gekennzeichnet, dass** der Glasbruch 0 bis 35 Gew.-% der Glasrohstoffe ausmacht.

10. Glaszusammensetzung, die für die Herstellung von Verstärkungsglasfäden geeignet ist und folgende Bestandteile innerhalb nachstehender in Gewichtsprozent angegebener Grenzen:
| | | | |
|---|---|---|---|
| SiO₂ | 58 | bis | 62 % |
| Al₂O₃ | 10 | bis | 16 % |
| CaO | | über | 18 % |
| MgO | | über | 1,5 % |
| CaO + MgO | | unter | 28 % |
| Na₂O + K₂O + Li₂O | | unter | 2 % |
| TiO₂ | | unter | 1,5 % |
| Fe₂O₃ | | unter | 0,5 % |
| B₂O₃ | | unter | 2 % |
| F₂ | | unter | 2 % |
umfasst, wobei die Zusammensetzung außerdem weniger als 1 % eines weiteren (weiterer) Bestandteils (Bestandteile) und mehr als 0,5 % mindestens eines der drei Bestandteile F₂, B₂O₃ oder Li₂O enthält.

## Claims

1. Glass fibre for reinforcement, the composition of which comprises the following constituents within limits defined hereinafter expressed in weight percentages:
| | |
|---|---|
| SiO₂ | 58 to 62% |
| Al₂O₃ | 10 to 16% |
| CaO | more than 18% |
| MgO | more than 1.5% |
| CaO + MgO | less than 28% |
| Na₂O + K₂O + Li₂O | less than 2% |
| TiO₂ | less than 1.5% |
| Fe₂O₃ | less than 0.5% |
| B₂O₃ | less than 2% |
| F₂ | less than 2% |
this composition further comprising less than 1% of other constituent(s) and comprising more than 0.5% of at least one of the three constituents F₂, B₂O₃ or Li₂O.

2. Glass fibre according to claim 1, **characterised in that** the glass forming the fibre has a viscosity of 10^{2,5} poises at a temperature between 1,200 and 1,380°C and a viscosity of 10³ poises at a temperature between 1,110 and 1290°C.

3. Glass fibre according to either claim 1 or claim 2, **characterised in that** in its composition the total CaO and MgO contents are greater than 21 wt.% and the CaO and MgO contents do not respectively exceed 26 and 10 wt.%.

4. Glass fibre according to any one of claims 1 to 3, **characterised in that** its composition comprises the following constituents within limits defined hereinafter expressed in weight percentages:
| | |
|---|---|
| SiO₂ | 58.5 to 61% |
| Al₂O₃ | 11 to 14% |
| CaO | 21 to 23% |
| MgO | 2 to 3.5% |
| Na₂O + K₂O + Li₂O | 0.5 to 1.8% |
| TiO₂ | 0 to 1% |
| Fe₂O₃ | 0 to 0.4% |
| B₂O₃ | up to 1.8% |
| F₂ | up to 1.8% |
this composition further comprising at least 0.7% of at least one of the three constituents F₂, B₂O₃, Li₂O and comprising less than 1% of other constituent(s).

5. Composite of glass fibre and organic and/or inorganic material(s), **characterised in that** it comprises glass fibres as defined by any one of claims 1 to 4.

6. Method for producing glass fibres by which a plurality of molten glass threads are drawn, running from a plurality of apertures disposed at the base of one or more die(s), in the form of one or more webs of continuous filaments, the filaments are then re-assembled into one or more threads which are collected on a moving support, the molten glass feeding the apertures of the die(s) having the following composition, expressed in weight percentages:
| | |
|---|---|
| SiO₂ | 58 to 62% |
| Al₂O₃ | 10 to 16% |
| CaO | more than 18% |
| MgO | more than 1.5% |
| CaO + MgO | less than 28% |
| Na₂O + K₂O + Li₂O | less than 2% |
| TiO₂ | less than 1.5% |
| Fe₂O₃ | less than 0.5% |
| B₂O₃ | less than 2% |
| F₂ | less than 2% |
this composition further comprising less than 1% of other constituent(s) and comprising more than 0.5% of at least one of the three constituents F₂, B₂O₃ or LiO₂.

7. Method according to claim 6, **characterised in that** the molten glass is obtained from basic materials mixed in appropriate proportions, at least one portion of said basic materials being the waste of the glass fibres.

8. Method according to claim 7, **characterised in that** the waste is the waste of glass fibres E and/or the waste of glass fibres as defined by any one of claims 1 to 4.

9. Method according to any one of claims 7 or 8, **characterised in that in that** the waste represents from 0 to 35 wt.% of the basic materials.

10. Glass composition for producing glass fibres for reinforcement comprising the following constituents within limits defined hereinafter expressed in weight percentages:
| | |
|---|---|
| SiO₂ | 58 to 62% |
| Al₂O₃ | 10 to 16% |
| CaO | more than 18% |
| MgO | more than 1.5% |
| CaO + MgO | less than 28% |
| Na₂O + K₂O + Li₂O | less than 2% |
| TiO₂ | less than 1.5% |
| Fe₂O₃ | less than 0.5% |
| B₂O₃ | less than 2% |
| F₂ | less than 2% |
this composition further comprising less than 1% of other constituent(s) and comprising more than 0.5% of at least one of the three components F₂, B₂O₃ or Li₂O.
